# EUROPÄISCHE PATENTSCHRIFT

(11) **EP 2 190 683 B1**
(45) Veröffentlichungstag und Bekanntmachung des Hinweises auf die Patenterteilung: **18.05.2011**
(21) Anmeldenummer: 08784886.7
(22) Anmeldetag: 18.07.2008
(51) Int. Cl.: B60C 29/02

(54) **VENTIL, REIFEN, FELGE UND RAD**
VALVE, TYRE, RIM AND WHEEL
VALVE, PNEU, JANTE ET ROUE

(30) Priorität: 17.08.2007 DE 202007011583 U
(43) Veröffentlichungstag der Anmeldung: 02.06.2010
(73) Patentinhaber: Alligator Ventilfabrik GmbH, 89537 Giengen (DE)
(72) Erfinder: PALAORO, Renato, 89518 Heidenheim (DE)
(74) Vertreter: Behrmann, Niels
(86) Internationale Anmeldenummer: PCT/EP2008/005907
(87) Internationale Veröffentlichungsnummer: WO 2009/024220

(56) Entgegenhaltungen:
- DE-A1- 1 902 839
- US-A- 2 839 120
- US-A- 4 564 056

## Beschreibung

Die Erfindung betrifft ein Ventil mit einem Ventilkörper, aufweisend: einen den Ventilkörper durchsetzenden Luftkanal und einen mit dem Ventilkörper gebildeten Ventilfuß an einem in Einbaulage zu einem Felgenrand proximalen Ende des Ventilkörpers, wobei ein distales Ende des Ventilkörpers zum Durchgreifen eines Ventilloches im Felgenrand und der Ventilfuß zur Anordnung auf einer reifenseitigen Seite des Felgenrandes vorgesehen ist. Die Erfindung betrifft auch einen Reifen und/oder eine Felge sowie ein Rad mit einem Reifen und einer Felge.

Bei einem Ventil der eingangs genannten Art ist üblicherweise ein Ventilfuß einstückig mit dem Ventilkörper gebildet oder auf andere Art unlösbar mit dem Ventilkörper verbunden und der Ventilfuß weist üblicherweise eine quer zur axialen Richtung orientierte Quererstreckung auf, deren Abmessung größer als eine Abmessung des Ventilloches ist, so dass eine Demontage eines solchen üblichen Ventils zwangsläufig zur reifenseitigen Seite, also in das Innere eines Rades erfolgen muss. Dadurch wird verhindert, dass ein Ventilkörper, z.B. bei hohen Drücken, ggf. auch aus einer Dichtung durch ein Ventilloch in einem Felgenrand herausgedrückt werden kann. Zum anderen ergeben sich zumeist vergleichsweise hohe Demontagekräfte zur Demontage des Ventils zum Radinneren, welche üblicherweise am größten Durchmesser des Ventilfußes aufgebracht werden, beispielsweise unter Abstützung eines speziellen Demontagewerkzeuges. Es ist üblich ein solches Demontagewerkzeug für das Ansetzen eines Hebels am Felgenhump abzustützen, wodurch eine vergleichsweise hohe punktuelle Krafteinleitung den Felgenhump und/oder schlimmstenfalls den Reifen am Dichtwulst beschädigen kann. Ein Grat am Felgenhump oder ein Schnitt am Dichtwulst kann zu einem irreparablen Defekt am Reifen führen. Im schlimmsten Fall kann dadurch ein schleichender oder unmittelbarer Druckverlust auftreten. Selbst bei einem schleichenden Druckverlust kann eine höhere Walgarbeit und dem daraus resultierenden Temperaturanstieg im Reifen zu Folgeschäden und im schlimmsten Fall zu einem Platzen des Reifens führen.

Ein Ventil mit einem Dichtkörper und einem Dichtelement nach dem Oberbegriff des Hauptanspruch ist aus der DE 19 02 839 A1 bekannt. Eine vergleichbare Lehre aus dem Stand der Technik ergibt sich ferner aus der US-A-2 839 120 sowie der US-A-4 564 056.

Es ist wünschenswert eine verbesserte Demontage zu ermöglichen.

An dieser Stelle setzt die Erfindung an, deren Aufgabe es ist ein Ventil, einen Reifen und/oder eine Felge mit einem Ventil und ein Rad anzugeben, bei dem eine Demontage des Ventils einfacher gestaltet werden kann, insbesondere eine Demontage des Ventils auch zu einer einem Reifen abgewandeten Seite eines Felgenrandes, insbesondere zum Radäußeren hin erfolgen kann.

Betreffend das Ventil wird die Aufgabe durch die Erfindung mit einem Ventil der eingangs genannten Art gelöst, bei dem erfindungsgemäß vorgesehen ist, dass der Ventilfuß zum Durchgreifen des Ventilloches vorgesehen ist und am proximalen Ende ein vom Ventilkörper separates, über den Ventilfuß hinausragendes Halteorgan angeordnet ist, das zur Anordnung auf einer reifenseitigen Seite des Felgenrandes vorgesehen ist.

Die Erfindung geht von der Überlegung aus, dass die im Stand der Technik auftretenden Probleme wesentlich durch einen untrennbar mit dem Ventilkörper verbundenen Ventilfuß entstehen, der gleichzeitig als Halteorgan an einem Ventilloch im Felgenrand dient. Ausgehend von dieser Überlegung hat die Erfindung erkannt, dass ein vom Ventilkörper separat vorgesehenes Halteorgan, das über den Ventilfuß, vorzugsweise in radialer Richtung, hinausragt das Ventil selbst bei hohen Drücken vor einem Herauspressen aus dem Ventilloch schützen kann. Darüber hinaus sieht das Konzept der Erfindung vor, dass der Erkenntnis folgend ein solches Halteorgan bei Bedarf, zweckmäßigerweise speziell ausgelegt sein kann, um vom Ventilkörper entfernt zu werden, da dieses separat vom Ventilkörper am proximalen Ende angeordnet ist. Durch das Konzept der Erfindung wird in überraschender Weise ein Ventilfuß ausgebildet, der nach Entfernen des Halteorgans zum Durchgreifen des Ventilloches vorgesehen ist, so dass der Ventilkörper insgesamt zu einer dem Reifen abgewandten Seite des Felgenrandes entfernt werden kann.

Mit der dem Konzept der Erfindung folgenden Demontage eines Ventils zum Radäußeren hin werden die eingangs genannten Probleme des Standes der Technik weitgehend vermieden und zusätzlich eine Demontage des Ventils gemäß dem Konzept der Erfindung vergleichsweise einfach gestaltet.

Vorzugsweise ist der Ventilkörper im Wesentlichen in axialer Richtung von einem Luftkanal durchsetzt. Der Ventilfuß ist vorzugsweise einstückig mit dem Ventilkörper gebildet. Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung, sowie hinsichtlich weiterer Vorteile zu realisieren. Zweckmäßigerweise weist der Ventilfuß eine quer zur Axialrichtung orientierte Quererstreckung auf, deren Abmessung geringer als eine Abmessung des Ventilloches ist. Dies gewährleistet ein Entfernen des Ventilkörpers mit einem regelmäßig untrennbar oder einstückig am Ventilkörper gebildeten Ventilfußes durch ein Ventilloch im Felgenrand nachdem das Halteorgan dem Konzept der Erfindung folgend bei der Demontage entfernt wurde. Das Halteorgan ist vorzugsweise nur zur Anordnung auf einer reifenseitigen Seite des Felgenrandes vorgesehen; mit anderen Worten, das Halteorgan durchgreift nicht das Ventilloch im Felgenrand. Zweckmäßigerweise ist das Halteorgan nicht zum Durchgreifen des Ventilloches vorgesehen. Insbesondere ist dazu vorgesehen, dass das Halteorgan eine quer zur axialen Richtung orientierte Quererstreckung aufweist, deren Abmessung größer als eine Abmessung des Ventilloches ist.

Es hat sich als vorteilhaft erwiesen, dass das Halteorgan einen Anschlag am Ventilkörper, insbesondere den Ventilfuß hintergreift. Dadurch lässt sich das Halteorgan besonders sicher und einfach am Ventilkörper festlegen. Vorzugsweise weist das Halteorgan dazu eine Anschlagfläche auf, die auf einer dem distalen Ende zugewandten Seite eines Anschlags am Ventilkörper, insbesondere des Ventilfußes, anliegt.

Dem Konzept der Erfindung folgend ist das Halteorgan nicht nur lediglich separat zum Ventilkörper gebildet, sondern darüber hinaus wieder entfernbar am Ventilkörper festgelegt. Mit anderen Worten, das Halteorgan ist ausgelegt, vom Ventilkörper wieder entfernbar zu sein. Vorzugsweise ist das Halteorgan aus einem harten oder wenig oder begrenzt elastischem Material gebildet. Beispielsweise kann das Halteorgan aus einem spröden Material, insbesondere leicht zerstörbarem Material gebildet sein, wie z.B. ein spröder oder harter Kunststoff od.dgl. Das Halteorgan kann auch metallisch sein. Es hat sich gezeigt, dass grundsätzlich unterschiedlichste Formen und Materialien eines wiederentfernbaren Halteorgans realisierbar sind - unabhängig davon haben sich zwei Varianten eines Halteorgans als besonders vorteilhaft erwiesen.

In einer ersten Variante hat es sich als besonders vorteilhaft erwiesen, dass das Halteorgan vollumfänglich über den Ventilfuß hinausragt. Dadurch lässt sich eine besonders gleichmäßig und sichere Anlage des Halteorgans am Ventilkörper erreichen. Vorteilhaft ist das Halteorgan dazu in Form einer Lochscheibe gebildet.

In einer zweiten Variante kann das Halteorgan teilumfänglich über den Ventilfuß hinausragen. Dies hat sich besonders vorteilhaft hinsichtlich der Wiederentfernbarkeit des Halteorgans erwiesen. Dazu kann das Halteorgan insbesondere in Form eines Segmentringes gebildet sein.

Um eine Wiederentfernbarkeit des Halteorgans besonders vorteilhaft zu realisieren hat es sich als zweckmäßig erwiesen, dass das Halteorgan eine Sollbruchstelle, insbesondere in Form einer Bruchrille aufweist. Diese Art der Realisierung einer Wiederentfernbarkeit hat sich als besonders zweckmäßig für ein vollumfänglich über den Ventilfuß hinausragendes Halteorgan erwiesen, beispielsweise in Form einer Lochscheibe mit einer oder mit mehreren Bruchrillen. Ein solches Halteorgan kann mit oder ohne ein übliches Werkzeug leicht durch Zerstörung der Sollbruchstelle vom Ventilkörper getrennt werden.

Zusätzlich oder alternativ kann das Halteorgan auch im Klemmsitz am Ventilkörper angebracht sein, insbesondere eine umfängliche Klemmöffnung aufweisen. Diese Art einer Realisierung einer Wiederentfernbarkeit hat sich insbesondere als vorteilhaft bei der zweiten Variante erwiesen. Ein solches Halteorgan kann besonders leicht mit oder ohne ein übliches Werkzeug vom Ventilkörper unter Überwindung der Klemmkraft des Halteorgans abgezogen werden.

Insbesondere ein teilumfänglich über den Ventilfuß hinausragendes Halteorgan, zweckmäßig ein Halteorgan gemäß der zweiten Variante, ist radial außenseitig gesichert. Grundsätzlich kann auch ein Halteorgan gemäß der ersten Variante radial außenseitig gesichert sein. Eine solche Sicherung ist insbesondere dazu ausgelegt, das Halteorgan vor einem unbeabsichtigten Lösen zu schützen, beispielsweise vor einem Lösen durch Fliehkraft zu schützen.

Eine Sicherung kann in besonders vorteilhafter Weise durch ein das Halteorgan umgreifendes Dichtelement, beispielsweise ein Dichtelement aus Gummi oder dgl. gebildet sein. Dadurch wird die Funktion des Dichtelements gleichzeitig ausgenutzt, um das Halteorgan zu sichern. Das Dichtelement kann das Halteorgan beispielsweise radial außenseitig vollständig oder wenigstens teilweise umgeben.

Das Dichtelement ist in besonders vorteilhafter Weise am Ventilkörper formschlüssig festgelegt. Eine Weiterbildung der Erfindung realisiert eine besonders rutschfeste Festlegung des Dichtelements am Ventilkörper, welche über eine reine reibschlüssige durch Presskraft entstehende Festlegung des Dichtelements am Ventilkörper hinausgeht. In einer besonders bevorzugten Weiterbildung ist dazu vorgesehen, dass der Ventilkörper eine außenumfänglich angeordnete Profilierung zur Rutschhemmung für ein Dichtelement aufweist, welches entsprechend ebenfalls eine angepasste Profilierung aufweist. Geeignet ist z. B. eine Wölbung oder Nut oder Kante oder dgl.

Grundsätzlich weist ein Dichtelement außenumfänglich eine dem Felgenrandprofil angepasste Profilierung auf, dadurch wird eine Dichtwirkung des Dichtelementes besonders optimiert.

Das Ventil weist zweckmäßigerweise am distalen Ende eine Ventilnadel im Luftkanal auf und/oder am Ventilkörper ein Befestigungsmittel für eine Verschlusskappe.

Es hat sich gezeigt, dass ein Dichtelement gemäß dem Konzept der Erfindung oder einer oder mehrerer Weiterbildungen desselben besonders vorteilhaft in Form eines CV-Ventils (Commercial-Vehicle-Ventil) für ein kommerzielles Fahrzeug ausgelegt ist.

Das Konzept der Erfindung führt zur Lösung der Aufgabe auch auf einen Reifen und/oder eine Felge mit einem Ventil gemäß dem Konzept der Erfindung oder einer Weiterbildung desselben.

Zur Lösung der Aufgabe führt die Erfindung auch auf ein Rad mit einem Reifen und einer Felge und einem Ventil gemäß dem Konzept der Erfindung oder einer Weiterbildung desselben.

Ausführungsbeispiele der Erfindung werden nun nachfolgend anhand der Zeichnung beschrieben.

Im Einzelnen zeigt die Zeichnung in:
- Fig. 1:: eine erste besonders bevorzugte Ausführungsform eines Ventils gemäß einer ersten Variante, in Ansicht A in einem perspektivischen Teilquerschnitt und Ansicht B und C das Halteorgan in einer Ausführung gemäß der ersten Variante als Drauf- und Seitenansicht;
- Fig. 2:: eine zweite besonders bevorzugte Ausführungsform eines Ventils gemäß einer zweiten Variante, in Ansicht A in einem perspektivischen Teilquerschnitt und in Ansicht B und C ein Halteorgan gemäß der zweiten Variante in einer Draufsicht und einer Seitenansicht.

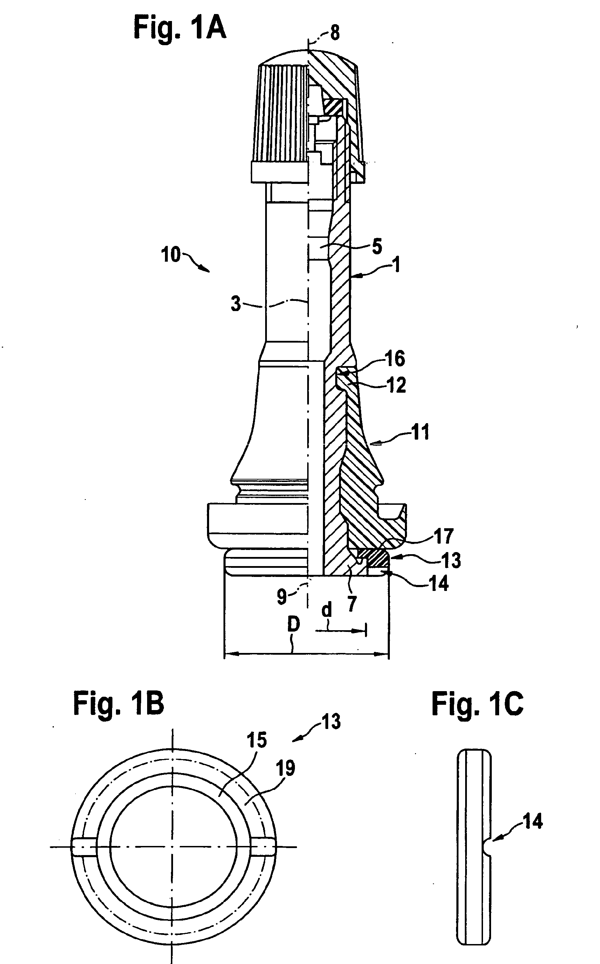

Fig. 1 zeigt in Ansicht A eine erste Ausführungsform eines Ventils 10 mit einem Ventilkörper 1, welcher einen den Ventilkörper 1 in axialer Richtung 3 durchsetzenden Luftkanal 5 und einen einstückig mit dem Ventilkörper 1 gebildeten Ventilfuß 7 aufweist, welcher an einem in Einbaulage zu einem Felgenrand proximalen Ende 9 des Ventilkörpers 1 angeordnet ist. Am distalen Ende 8 ist im Luftkanal 5 eine Ventilnadel angeordnet und der Ventilkörper 1 trägt eine Verschlusskappe. Ein distales Ende 8 des Ventilkörpers ist zum Durchgreifen eines Ventilloches in einem Felgenrand vorgesehen und der Ventilfuß 7 ist zur Anordnung auf einer reifenseitigen Seite des Felgenrandes vorgesehen.

Dem Konzept der Erfindung folgend ist der Ventilfuß 7 zum Durchgreifen des Ventilloches vorgesehen und weist vorliegend eine quer zur axialen Richtung orientierte Quererstreckung auf, deren Abmessung d geringer als eine Abmessung des Ventilloches ist. Der Felgenrand am Ventilloch ist zur außenseitigen Anlage an einem den Ventilkörper 1 umgebenden und dementsprechend profilierten Dichtelements 11 vorgesehen.

Um das Ventil 10 gemäß dem Konzept der Erfindung selbst bei hohen Drücken vor dem Herauspressen aus dem Ventilloch zu schützen ist ein über dem Ventilfuß 7 in radialer Richtung hinausragendes Halteorgan 13 am proximalen Ende 9 separat vom Ventilkörper 1 angeordnet und zur Anordnung auf einer reifenseitigen Seite des Felgenrandes vorgesehen.

Das Halteorgan 13 ist in Ansicht B und C der Fig. 1 näher dargestellt und vorliegend aus einem nicht elastischen, vergleichsweise spröden Kunststoff gebildet, der leicht mit einem Schraubenzieher od.dgl. üblichen Werkzeug gesprengt werden kann. Das Halteorgan 13 ist gemäß dem Konzept der Erfindung nicht zum Durchgreifen des Ventilloches vorgesehen und weist dazu eine quer zur axialen Richtung 3 orientierte Quererstreckung auf, deren Abmessung D größer als eine Abmessung des Ventilloches ist. Das Halteorgan 13 hintergreift zur Festlegung am Ventilkörper einen Anschlag am Ventilkörper, der vorliegend in Form des Ventilfußes 7 gebildet ist. Dazu weist das Halteorgan 13 eine Anschlagfläche 15 auf, die auf einer dem distalen Ende 8 zugewandten Seite 17 des Ventilfußes 7 anliegt.

Gemäß dem Konzept der Erfindung ist das Halteorgan 13 entfernbar am Ventilkörper 1 festgelegt. Gemäß der in Fig. 1 dargestellten ersten Variante umgibt dazu das Halteorgan 13 den Ventilkörper 1 vollumfänglich und ragt ebenso vollumfänglich über den Ventilfuß 7 hinaus, so dass das vorliegend in Form einer Lochscheibe gebildete Halteorgan 13 besonders gut und gleichmäßig am Ventilfuß 7 anliegt und der über die Anschlagfläche 15 hinaus stehende Rand 19 hemmt am Felgenrand des Ventilloches ein Herauspressen des Ventils.

Um das Halteorgan 13 in Form der Lochscheibe vom Ventilkörper 1 zu entfernen, weist dieses eine Sollbruchstelle 14 in Form einer Bruchrille auf, die derart gestaltet ist, dass hier mit einem üblichen Werkzeug durch Zerstörung geöffnet werden kann. Danach lässt sich aufgrund der im Vergleich zum Ventilloch kleineren Querabmessung d des Ventilfußes 7 der Ventilkörper 1 insgesamt durch das Ventilloch nach der dem Reifen abgewandten Seite des Felgenrandes, also zum Radäußeren hin, durch das Ventilloch im Felgenrand herausziehen. Übliche Probleme einer radinnenseitigen Demontage bei üblichen Ventilen entfallen, da die Demontage den Felgeninnenrand oder den Reifen frei von Werkzeugeinwirkungen hält.

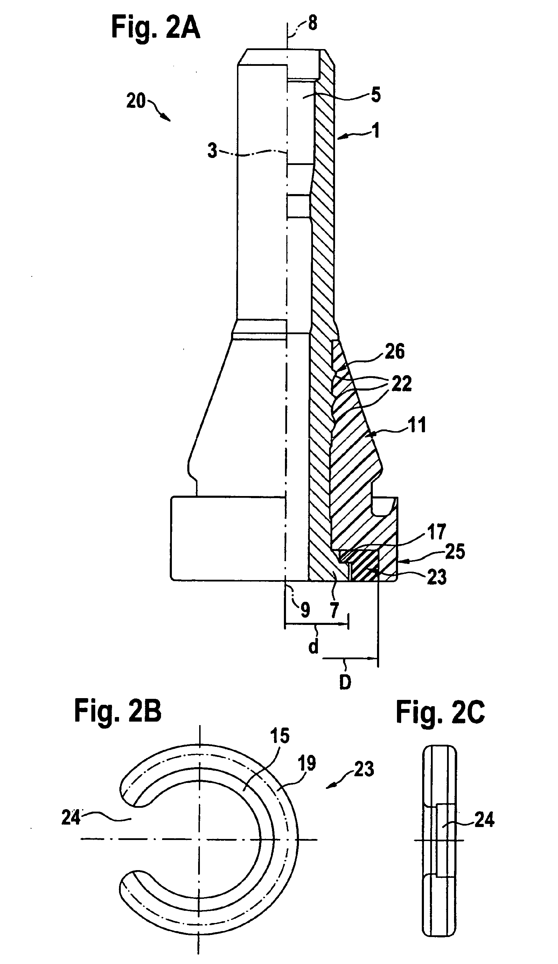

Fig. 2 zeigt eine weitere Ausführungsform eines Ventils 20 gemäß einer zweiten Variante, bei der für gleiche Teile oder Teile gleicher Funktion gleiche Bezugszeichen verwendet sind. Im Unterschied zu der in Fig. 1 gezeigten ersten Ausführungsform eines Ventils 10 gemäß der ersten Variante umgibt beim Ventil 20 das Halteorgan 23 den Ventilkörper 1 teilumfänglich und ragt teilumfänglich über den Ventilfuß 7 hinaus. Dabei ist das Halteorgan 23 in Form eines vorliegend metallischen Segmentringes gebildet und in Ansicht B und C der Fig. 2 näher gezeigt. Der Segmentring weist eine Klemmöffnung 24 auf, die so über den Schaft des Ventilkörpers 1 geschoben werden kann, dass das Halteorgan 23 im Klemmsitz am Ventilkörper angebracht ist. Zur Demontage kann der Segmentring vom Ventilkörper 1 abgezogen werden und ist grundsätzlich durch die im Klemmsitz ausgeübte Einspannung vor einem ungewollten Entfernen vom Ventilkörper 1 gehindert. Als zusätzliche Sicherung umgreift das Dichtelement 11 - vorliegend im Unterschied zum Ventil 10 der Fig. 1 - das Halteorgan 23, so dass vorliegend das Halteorgan aufgrund seiner Klemmöffnung 24 und des Dichtelements 11 selbst bei hohen Fliehkräften vor einem Herausschleudern gesichert ist. Das Dichtelement 11 weist dazu eine Erweiterung in Form eines Kragens 25 auf, der das Halteorgan 23 vollumfänglich umgibt.

In der in Fig. 1 gezeigten Ausführungsform eines Ventils 10 als auch in der in Fig. 2 gezeigten Ausführungsform eines Ventils 20 ist das Dichtelement 11 grundsätzlich passgenau am Ventilkörper 1 reibschlüssig festgelegt und bereits dadurch wird eine geeignete Widerstandskraft zwischen Dichtelement 11 und Ventilkörper 1 etabliert, die ein Verrutschen des Dichtelements 11 gegenüber dem Ventilkörper 1 weitgehend verhindert.

Zusätzlich ist das Dichtelement 11 am Ventilkörper 1 sowohl beim Ventil 10 als auch beim Ventil 20 formschlüssig festgelegt.

Beim Ventil 10 weist das Dichtelement 11 dazu eine Profilierung in Form einer nach innen gerichteten Auswölbung 12 auf, die in eine entsprechende Profilierung in Form einer Rastnut 16 des Ventilkörpers 1 eingreift, so dass zusätzlich eine Rutschhemmung realisiert ist, die das Nachrutschen des Dichtelements 11 während des Einziehvorgangs und während der übrigen Montage des Ventils 10 verhindert. Zusätzlich sind Einziehkräfte in das Ventilloch weitgehend herabgesetzt.

Bei der in Fig. 2 gezeigten Ausführungsform eines Ventils 20 ist ebenfalls eine formschlüssige Festlegung des Dichtelements 11 am Ventilkörper 1 realisiert. Im Unterschied zum Ventil 10 ist beim Ventil 20 dazu am Dichtelement eine Profilierung in Form einer Anzahl von - im vorliegenden Fall drei - Einwölbungen 22 vorgesehen, in die eine entsprechende Profilierung in Form von Rastkanten 26 auf dem Ventilkörper 1 des Ventils 20 eingreifen. Grundsätzlich kann bei einem hier nicht gezeigten Dichtelement eine Kombination der vorgenannten formschlüssigen Festlegungen realisiert sein. Zusätzlich oder alternativ können sich andere formschlüssige Festlegungen eines Dichtelements als vorteilhaft erweisen. Insgesamt kann je nach Zweckmäßigkeit eine ausreichende Hemmung des Dichtelements 11 beim Einziehvorgang des Ventils realisiert sein.

Die Erfindung geht aus von einem Ventil 10, 20 mit einem Ventilkörper 1 aufweisend: einen den Ventilkörper 1, insbesondere in axialer Richtung 3, durchsetzenden Luftkanal 5 und einen, insbesondere einstückig, mit dem Ventilkörper 1 gebildeten Ventilfuß 7 an einem in Einbaulage zu einem Felgenrand proximalen Ende 9 des Ventilkörpers 1, wobei ein distales Ende 8 des Ventilkörpers 1 zum Durchgreifen eines Ventilloches im Felgenrand und der Ventilfuß 7 zu Anordnung auf einer reifenseitigen Seite des Felgenrandes vorgesehen ist. Um eine einfachere Demontage des Ventils 10, 20, insbesondere auch in einer einem Reifen abgewandten Seite des Felgenrandes, zu ermöglichen, sieht die Erfindung vor, dass der Ventilfuß 7 zum Durchgreifen des Ventilloches vorgesehen ist und am proximalen Ende 9 ein von Ventilkörper 1 separates, über den Ventilfuß 7, insbesondere in radialer Richtung, hinausragendes Halteorgan 13, 23 angeordnet ist, das zur Anordnung auf einer reifenseitigen Seite des Felgenrandes vorgesehen ist.

## Patentansprüche

1. Ventil (10, 20) mit einem Ventilkörper (1) und einem Dichtelement (11), aufweisend:
einen den Ventilkörper (1) durchsetzenden Luftkanal (5) und einen mit dem Ventilkörper (1) gebildeten Ventilfuß (7) an einem in Einbaulage zu einem Felgenrand proximalen Ende (9) des Ventilkörpers (1), wobei ein distales Ende (8) des Ventilkörpers (1) zum Durchgreifen eines Ventilloches im Felgenrand und der Ventilfuß (7) zur Anordnung auf einer reifenseitigen Seite des Felgenrandes und zum Durchgreifen des Ventilloches vorgesehen ist
**dadurch gekennzeichnet, dass**
zusätzlich zum Dichtelement (11) am proximalen Ende (9) ein vom Ventilkörper (1) separates, über den Ventilfuß (7) in radialer Richtung hinausragendes Halteorgan (13, 23) angeordnet ist, das zur Anordnung auf einer reifenseitigen Seite des Felgenrandes vorgesehen ist, wobei das Halteorgan (13, 23) entfernbar am Ventilkörper (1) festgelegt ist und aus einem harten oder wenig oder begrenzt elastischen Material gebildet ist.

2. Ventil (10, 20) nach Anspruch 1 **dadurch gekennzeichnet, dass** der, insbesondere einstückig, mit dem Ventilkörper (1) gebildete Ventilfuß (7) eine quer zur axialen Richtung (3) orientierte Quererstreckung aufweist, deren Abmessung (d) geringer als eine Abmessung des Ventilloches ist.

3. Ventil (10, 20) nach Anspruch 1 oder 2 **dadurch gekennzeichnet, dass**
das Halteorgan (13, 23) nicht zum Durchgreifen des Ventilloches vorgesehen ist, insbesondere das Halteorgan (13, 23) eine quer zur axialen Richtung (3) orientierte Quererstreckung aufweist, deren Abmessung (D) größer als eine Abmessung des Ventilloches ist.

4. Ventil (10, 20) nach einem der Ansprüche 1 bis 3 **dadurch gekennzeichnet, dass**
das Halteorgan (13, 23) nur zur Anordnung auf einer reifenseitigen Seite des Felgenrandes vorgesehen ist, insbesondere einen Anschlag am Ventilkörper (1), insbesondere den Ventilfuß (7), hintergreift.

5. Ventil (10, 20) nach einem der Ansprüche 1 bis 4 **dadurch gekennzeichnet, dass**
das Halteorgan (13, 23) eine Anschlagfläche (15) aufweiset, die auf einer dem distalen Ende (8) zugewandten Seite (17) eines Anschlags am Ventilkörper (1), insbesondere des Ventilfußes (7), anliegt.

6. Ventil (10, 20) nach einem der Ansprüche 1 bis 5 **dadurch gekennzeichnet, dass**
das Halteorgan (13, 23) über den Ventilfuß (7) in radialer Richtung hinausragt.

7. Ventil (10, 20) nach einem der Ansprüche 1 bis 6 **dadurch gekennzeichnet, dass**
das Halteorgan (13) vollumfänglich über den Ventilfuß (7) hinausragt, insbesondere in Form einer Lochscheibe gebildet ist.

8. Ventil (10, 20) nach einem der Ansprüche 1 bis 6
**dadurch gekennzeichnet, dass**
das Halteorgan (23) teilumfänglich über den Ventilfuß (7) hinausragt, insbesondere in Form eines Segmentringes gebildet ist.

9. Ventil (10, 20) nach einem der Ansprüche 1 bis 8
**dadurch gekennzeichnet, dass**
das Halteorgan (13) eine Sollbruchstelle (14), insbesondere in Form einer Bruchrille, aufweist.

10. Ventil (10, 20) nach einem der Ansprüche 1 bis 9
**dadurch gekennzeichnet, dass**
das Halteorgan (23) in Klemmsitz am Ventilkörper (1) angebracht ist, insbesondere eine umfängliche Klemmöffnung (24) aufweist.

11. Ventil (10, 20) nach einem der Ansprüche 1 bis 10
**dadurch gekennzeichnet, dass**
das Halteorgan (23), insbesondere ein teilumfänglich
über den Ventilfuß (7) hinausragendes Halteorgan (23), radial außenseitig gesichert ist.

12. Ventil (10, 20) nach einem der Ansprüche 1 bis 11
**dadurch gekennzeichnet, dass**
das Halteorgan (23), insbesondere ein teilumfänglich über den Ventilfuß (7) hinausragendes Halteorgan (23), durch ein das Halteorgan umgreifendes Dichtelement (11), insbesondere ein Gummi, radial außenseitig wenigstens teilweise umgeben ist, insbesondere durch einen am Halteorgan (23) ausgebildeten Kragen (25).

13. Ventil (10, 20) nach einem der Ansprüche 1 bis 12
**dadurch gekennzeichnet, dass**
das Dichtelement (11) am Ventilkörper (1) formschlüssig festgelegt ist.

14. Ventil (10, 20) nach einem der Ansprüche 1 bis 13
**dadurch gekennzeichnet, dass**
der Ventilkörper (1) und/oder das Dichtelement (11) eine Profilierung zur Rutschhemmung für das Dichtelement (11) aufweist.

15. Ventil (10, 20) nach einem der Ansprüche 1 bis 14
**dadurch gekennzeichnet, dass**
ein Dichtelement (11) außenumfänglich eine dem Felgenrandprofil angepasst Profilierung aufweist.

16. Ventil (10, 20) nach einem der Ansprüche 1 bis 15
dadurch gekenntzeichnet, dass der Luftkanal (5) den Ventilkörper (1) in axialer Richtung (3) durchsetzt, insbesondere am distalen Ende (8) eine Ventilnadel im Luftkanal angeordnet ist.

17. Ventil (10, 20) nach einem der Ansprüche 1 bis 16
**dadurch gekennzeichnet, dass**
am distalen Ende (8) am Ventilkörper (1) ein Befestigungsmittel für eine Verschlusskappe angebracht ist.

18. Ventil (10, 20) nach einem der vorhergehenden Ansprüche in Form eines CV-Ventils für ein kommerzielles Fahrzeug.

19. Reifen und/oder Felge mit einem Ventil (10, 20) nach einem der vorhergehenden Ansprüche.

20. Rad mit einem Reifen und einer Felge und einem Ventil (10, 20) nach einem der Ansprüche 1 bis 18.

## Claims

1. Valve (10, 20) having a valve body (1) and a sealing member (11), comprising: an air duct (5), which passes through the valve body (1), and a valve spud (7), formed together with the valve body (1) on an end (9) of the valve body (1) which is proximal to a rim edge in the installed position, a distal end (8) of the valve body (1) being provided for penetration of a valve hole in the rim edge and the valve spud (7) being provided for arrangement on a tyre-side face of the rim edge and for penetration of the valve hole, **characterised in that**, in addition to the sealing member (11), a retaining member (13, 23) which is separate from the valve body (1) and projects past the valve spud (7) in the radial direction is arranged on the proximal end (9), and is provided for arrangement on a tyre-side face of the rim edge, the retaining member (13, 23) being fixed removably on the valve body (1) and being formed from a material which is rigid or has low or limited resilience.

2. Valve (10, 20) according to claim 1, **characterised in that** the valve spud (7), which is formed together with and in particular integrally with the valve body (1), has a transverse extent, orientated transverse to the axial direction (3), of a size (d) which is less than the size of the valve hole.

3. Valve (10, 20) according to either claim 1 or claim 2, **characterised in that** the retaining member (13, 23) is not provided for penetration of the valve hole, and in particular the retaining member (13, 23) has a transverse extent, orientated transverse to the axial direction (3), of a size (D) which is greater than the size of the valve hole.

4. Valve (10, 20) according to any one of claims 1 to 3, **characterised in that** the retaining member (13, 23) is merely provided for arrangement on a tyre-side face of the rim edge, and in particular engages a stop on the valve body (1), in particular engages the valve spud (7), from behind.

5. Valve (10, 20) according to any one of claims 1 to 4, **characterised in that** the retaining member (13, 23) comprises a stop face (15) which rests against a face (17), pointing towards the distal end (8), of a stop on the valve body (1), in particular of the valve spud (7).

6. Valve (10, 20) according to any one of claims 1 to 5, **characterised in that** the retaining member (13, 23) projects past the valve spud (7) in the radial direction.

7. Valve (10, 20) according to any one of claims 1 to 6, **characterised in that** the retaining member (13) projects past the valve spud (7) in its entirety, and in particular is formed as a pierced disk.

8. Valve (10, 20) according to any one of claims 1 to 6, **characterised in that** the retaining member (23) projects past the valve spud (7) in part, and in particular is formed as a segment ring.

9. Valve (10, 20) according to any one of claims 1 to 8, **characterised in that** the retaining member (13) comprises a predetermined breaking point (14), in particular in the form of a breaking groove.

10. Valve (10, 20) according to any one of claims 1 to 9, **characterised in that** the retaining member (23) is applied to the valve body (1) in a press fit, and in particular comprises a circumferential clamping opening (24).

11. Valve (10, 20) according to any one of claims 1 to 10, **characterised in that** the retaining member (23), in particular a retaining member (23) which projects past the valve spud (7) in part, is radially externally secured.

12. Valve (10, 20) according to any one of claims 1 to 11, **characterised in that** the retaining member (23), in particular a retaining member (23) which projects past the valve spud (7) in part, is radially externally surrounded at least in part by a sealing member (11), in particular a rubber member, which encompasses the retaining member, in particular by a collar (25) formed on the retaining member (23).

13. Valve (10, 20) according to any one of claims 1 to 12, **characterised in that** the sealing member (11) is fixed to the valve body (1) in a positive fit.

14. Valve according to any one of claims 1 to 13, **characterised in that** the valve body (1) and/or the sealing member (11) comprise profiling for preventing slipping of the sealing member (11).

15. Valve (10, 20) according to any one of claims 1 to 14, **characterised in that** a sealing member (11) comprises, on the outer circumference, profiling matched to the profile of the rim edge.

16. Valve (10, 20) according to any one of claims 1 to 15, **characterised in that** the air duct (5) passes through the valve body (1) in the axial direction (3), and in particular a valve needle is arranged in the air duct at the distal end (8).

17. Valve (10, 20) according to any one of claims 1 to 16, **characterised in that** a fastening means for a sealing cap is attached to the valve body (1) at the distal end (8).

18. Valve (10, 20) according to any one of the preceding claims, in the form of a CV valve for a commercial vehicle.

19. Tyre and/or rim comprising a valve (10, 20) according to any one of the preceding claims.

20. Wheel comprising a tyre and a rim and a valve (10, 20) according to any one of claims 1 to 18.

## Revendications

1. Valve (10, 20) comprenant un corps de valve (1) et un élément d'étanchéité (11), présentant :
un canal d'air (5) traversant le corps de valve (1) et une base de valve (7) formée avec le corps de valve (1) à une extrémité (9) du corps de valve (1) proximale à un bord de la jante dans une position de montage, une extrémité distale (8) du corps de valve (1) étant prévue pour s'engager à travers un trou de valve dans le bord de la jante et la base de valve (7) étant prévue pour être disposée sur un côté du bord de la jante tourné vers le pneu et pour s'engager à travers le trou de valve, **caractérisée en ce qu'**en plus de l'élément d'étanchéité (11) à l'extrémité proximale (9), il est prévu un organe de retenue (13, 23) séparé du corps de valve (1),
saillant au-delà de la base de valve (7) dans la direction radiale, qui est prévu pour être disposé sur un côté du bord de la jante tourné vers le pneu, l'organe de retenue (13, 23) étant fixé de manière amovible sur le corps de valve (1) et étant formé en un matériau dur ou peu élastique ou d'élasticité limitée.

2. Valve (10, 20) selon la revendication 1, **caractérisée en ce que** la base de valve (7) formée notamment d'une seule pièce avec le corps de valve (1) présente une étendue transversale orientée transversalement à la direction axiale (3), dont la dimension (d) est inférieure à une dimension du trou de valve.

3. Valve (10, 20) selon la revendication 1 ou 2,
**caractérisée en ce que** l'organe de retenue (13, 23) n'est pas prévu pour s'engager à travers le trou de valve, en particulier l'organe de retenue (13, 23) présente une étendue transversale orientée transversalement à la direction axiale (3), dont la dimension (D) est supérieure à une dimension du trou de valve.

4. Valve (10, 20) selon l'une quelconque des revendications 1 à 3,
**caractérisée en ce que** l'organe de retenue (13, 23) n'est prévu que pour être disposé sur un côté du bord de la jante tourné vers le pneu, en particulier s'engage par l'arrière avec une butée sur le corps de valve (1), notamment la base de valve (7).

5. Valve (10, 20) selon l'une quelconque des revendications 1 à 4,
**caractérisée en ce que** l'organe de retenue (13, 23) présente une surface de butée (15) qui s'applique sur un côté (17) tourné vers l'extrémité distale (8), d'une butée sur le corps de valve (1), en particulier de la base de valve (7).

6. Valve (10, 20) selon l'une quelconque des revendications 1 à 5,
**caractérisée en ce que** l'organe de retenue (13, 23) fait saillie au-delà de la base de valve (7) dans la direction radiale.

7. Valve (10, 20) selon l'une quelconque des revendications 1 à 6,
**caractérisée en ce que** l'organe de retenue (13) fait saillie sur toute sa périphérie au-delà de la base de valve (7), en particulier est formé en forme de disque perforé.

8. Valve (10, 20) selon l'une quelconque des revendications 1 à 6,
**caractérisée en ce que** l'organe de retenue (23) fait saillie sur une partie de sa périphérie au-delà de la base de valve (7), en particulier est formé en forme de bague segmentée.

9. Valve (10, 20) selon l'une quelconque des revendications 1 à 8,
**caractérisée en ce que** l'organe de retenue (13) présente un point de rupture (14), en particulier en forme de rainure de rupture.

10. Valve (10, 20) selon l'une quelconque des revendications 1 à 9,
**caractérisée en ce que** l'organe de retenue (23) est monté sur le corps de valve (1) par ajustement serré, en particulier présente une ouverture de serrage périphérique (24).

11. Valve (10, 20) selon l'une quelconque des revendications 1 à 10, **caractérisée en ce que**
l'organe de retenue (23), en particulier un organe de retenue (23) faisant saillie sur une partie de sa périphérie au-delà de la base de valve (7), est fixé radialement du côté extérieur.

12. Valve (10, 20) selon l'une quelconque des revendications 1 à 11,
**caractérisée en ce que** l'organe de retenue (23), en particulier un organe de retenue (23) faisant saillie sur une partie de sa périphérie au-delà de la base de valve (7), est entouré au moins en partie par un élément d'étanchéité (11) venant en prise autour de l'organe de retenue, en particulier un caoutchouc, radialement du côté extérieur, en particulier par un collet (25) réalisé sur l'organe de retenue (23).

13. Valve (10, 20) selon l'une quelconque des revendications 1 à 12,
**caractérisée en ce que** l'élément d'étanchéité (11) est fixé par engagement par coopération de forme sur le corps de valve (1).

14. Valve (10, 20) selon l'une quelconque des revendications 1 à 13,
**caractérisée en ce que** le corps de valve (1) et/ou l'élément d'étanchéité (11) présentent un profilage pour le blocage anti-glissement de l'élément d'étanchéité (11).

15. Valve (10, 20) selon l'une quelconque des revendications 1 à 14,
**caractérisée en ce qu'**un élément d'étanchéité (11) présente sur sa périphérie extérieure un profilage adapté au profil de bord de la jante.

16. Valve (10, 20) selon l'une quelconque des revendications 1 à 15,
**caractérisée en ce que** le canal d'air (5) traverse le corps de valve (1) dans la direction axiale (3), notamment un pointeau de valve est disposé à l'extrémité distale (8) dans le canal d'air.

17. Valve (10, 20) selon l'une quelconque des revendications 1 à 16,
**caractérisée en ce qu'**un moyen de fixation pour un capuchon de fermeture est monté à l'extrémité distale (8) sur le corps de valve (1).

18. Valve (10, 20) selon l'une quelconque des revendications précédentes, en forme de valve CV pour un véhicule commercial.

19. Pneu et/ou jante comprenant une valve (10, 20) selon l'une quelconque des revendications précédentes.

20. Roue comprenant un pneu, une jante et une valve (10, 20) selon l'une quelconque des revendications 1 à 18.
